# EUROPÄISCHE PATENTSCHRIFT

(11) **EP 1 171 786 B1**
(45) Veröffentlichungstag und Bekanntmachung des Hinweises auf die Patenterteilung: **18.09.2002**
(21) Anmeldenummer: 00917020.0
(22) Anmeldetag: 30.03.2000
(51) Int. Cl.: G02B 1/04, G02B 6/16

(54) **OPTISCHE ADER**
OPTICAL WAVE-GUIDE
GUIDE D'ONDES OPTIQUES

(30) Priorität: 31.03.1999 DE 19914743
(43) Veröffentlichungstag der Anmeldung: 16.01.2002
(73) Patentinhaber: EMS-Chemie AG, 7013 Domat/Ems (CH)
(72) Erfinder: HORN, Hans-Matthias, D-96465 Neustadt (DE); SCHAEFER, Joachim, D-96465 Neustadt (DE); SCHMIDT, Ilona, Hickory NC 28601 (US); THULLEN, Helmut, CH-7402 Bonaduz (CH); EICHHORN, Volker c/o EMS Far Eastern Ltd., Fu Kou Hsiang, Hsin Chu Hsien (TW); WUTKE, Thomas, D-51545 Waldbröl (DE); STOEPPELMANN, Georg, CH-7402 Bonaduz (CH)
(74) Vertreter: Becker Kurig Straus
(86) Internationale Anmeldenummer: EP0002831
(87) Internationale Veröffentlichungsnummer: WO00060382

(56) Entgegenhaltungen:
- EP-A- 0 239 935
- EP-A- 0 767 190
- EP-A- 0 883 001
- WO-A-95/24450
- GB-A- 2 198 258
- PATENT ABSTRACTS OF JAPAN vol. 016, no. 390 (P-1405), 19. August 1992 (1992-08-19) & JP 04 127107 A (ASAHI CHEM IND CO LTD), 28. April 1992 (1992-04-28)

## Beschreibung

Die vorliegende Erfindung betrifft optische Adern mit einem einen Faserkem und einen ein- oder mehrschichtig aufgebauten Fasermantel aufweisenden Kunststoff-Lichtwellenleiter (im folgenden kurz K-LWL) und mindestens einer den K-LWL umschließenden Schutzhülle. Der Fasermantel oder zumindest seine äußere Schicht kann aus einem fluorhaltigen Kunststoff bestehen. Für die Schutzumhüllung des Faserkerns kann Polyamid eingesetzt werden.

Kunststoff-Lichtwellenleiter kommen im Bereich der Telekommunikation als störunanfalliges und einfach handhabbares optisches Übertragungselement überall dort zum Einsatz. wo der Abstand zwischen Sende- und Empfangseinheit nur wenige Meter bis maximal 100-150 m beträgt. Auch in den Bereichen Verkehrstechnik/Fahrzeugbau (Daten- und Signalübertragung in Kraftfahrzeugen. Flugzeugen. Schiffen usw.), Beleuchtung (Wechselverkehrszeichen), Automatisierungstechnik (Maschinensteuerung) und Sensorik gewinnen K-LWL zunehmend an Bedeutung (Draht 46 (1995) 4, Seiten 187-190).

Ein der Daten- oder Signalübertragung dienender K-LWL besteht aus einem häufig aus Polymethylmethacrylat (PMMA; Brechzahl H_{PMMA} =1,49) gefertigten Faserkern (∅_{Kem} ≈ 980 µm) und einem den Faserkern konzentrisch umhüllenden, auch als "Cladding" bezeichneten, ein- oder mehrschichtig aufgebauten Fasermantel (Außendurchmesser ∅_{Mantel} ≈ 1000 µm). Als Mantelmaterial finden vorwiegend fluorhaltige Kunststoffe Verwendung, deren Brechzahl im Bereich zwischen n_{Mantel} = 1.35 - 1,42 liegt. Die optische Dämpfung eines solchen K-LWL beträgt typischerweise 130-150 db/km (λ = 650 nm), der minimale Biegeradius etwa 5-10 mm.

Um den empfindlichen K-LWL vor mechanischen, thermischen und chemischen Einwirkungen zu schützen. wird er mit einer im folgenden als Schutzhülle bezeichneten. ggf. auch mehrschichtig aufgebauten Kunststoffmantel versehen (WO 99/12063). Die mittels eines Extruders aufgebrachte Schutzhülle (Außendurchmesser ∅_{Ader} ≈ 1,5-2,2 mm) kann, je nach Verwendungszweck oder Einsatzgebiet, beispielsweise aus Polyethylen (PE), Polyvinylchlorid (PVC), Ethylenvinylacetat (EVA) oder Polyamid (PA) bestehen.

Im Bereich des Automobilbaus finden Polyamide als Schutzhüllenmaterial Verwendung, da es den dortigen Anforderungen hinsichtlich der mechanischen Festigkeit (Zugfestigkeit. Querdruckfestigkeit), der maximalen Einsatztemperatur und der chemischen Beständigkeit erfüllt. Probleme bereitet allerdings die schlechte Haftung der Polyamid-Schutzhülle auf einem K-LWL, dessen Fasermantel aus einem fluorhaltigen Polymer besteht. Der nur schwache Haftsitz der Schutzhülle wirkt sich insbesondere dann nachteilig aus, wenn die optische Ader (K-LWL plus Schutzhülle) in einer großen Temperaturschwankungen unterliegenden Umgebung (Fahrgastzelle eines Kraftfahrzeuges) verlegt ist und sich der K-LWL aufgrund seines unterschiedlichen Wärmedehnungsverhaltens und der nur schlechten Haftung des Polyamids auf dem Fluorpolymer relativ zur Schutzhülle bewegt. Dies hat zur Folge, daß sich beispielsweise der Abstand der Stirnfläche des K-LWL zu den Sende- und Empfangselementen (Leuchtdiode/PIN-Diode) unter Umständen soweit vergrößert, daß unzulässig hohe, ggf. zum Ausfall der Datenübertragungsstrecke führende Intensitätsverluste auftreten. Außerdem besteht die Gefahr der Beschädigung der Sende- oder Empfangselemente, falls der K-LWL zu weit aus der Schutzhülle herauswandert.

Um diesen als "Pistoning" des K-LWL bezeichneten Effekt zu unterdrücken, werden Stecker, Koppler oder Halterungen verwendet, die große Klemm- oder Crimpkräfte auf die Schutzhülle ausüben und so die Reibung zwischen Schutzhülle und K-LWL erhöhen. Die dadurch bewirkte Deformation der Grenzschicht zwischen Faserkern und Fasermantel hat allerdings eine erhöhte Signaldämpfung zur Folge.

Das Abmanteln der Schutzschicht im Stecker verhindert zwar das "Pistoning", birgt allerdings die Gefahr, den Fasermantel während der Montage durch die unsachgemäße Handhabung des mit einem Messerpaar ausgestatteten Absetzwerkzeugs zu beschädigen.

Die vom Stecker auf die optische Ader ausgeübten Klemm- oder Crimpkräfte lassen sich auch durch eine formschlüssige Verankerung des K-LWL in einer konusförmigen Bohrung des Steckergehäuses reduzieren. So wurde vorgeschlagen, die Stirnfläche des K-LWL mit Hilfe einer heißen Platte anzuschmelzen, den entstehenden Schmelzwulst in die sich nach Innen verjüngende Steckerbohrung zu drücken und den K-LWL so fest im Steckergehäuse zu verankern. Im aufgeschmolzenen und damit deformierten Bereich weicht die Geometrie des K-LWL u.U. erheblich von der Totalreflexion ermöglichenden Zylindergeometrie ab, so daß im Steckergehäuse erhöhte Intensitätsverluste auftreten.

EP 0 649 738 A1 beschreibt, daß man eine kraftschlüssige Verbindung aus Polyamid und Polyvinylidenfluorid dadurch herstellen kann, daß man dem Polyamid ein Polyglutarimid zumischt. So kann z.B. durch ein einstufiges Extrusionsverfahren ein Zweischichtverbund aus einem Polyamid und einem Polyvinylidenfluorid, ein Dreischichtverbund aus einem Polyamid, einer Haftvermittlerschicht aus einem Polyamid-Polyglutarimid-Blend und einem Polyvinylidenfluorid hergestellt werden. Polyglutarimide sind auch als Polymethacrylimide (PMMI) bekannt.

Für die Extrusionsverarbeitung bei K-LWL ist es wichtig, daß die Schutzhülle, die direkt auf dem Fasermantel liegt, bei möglichst tiefer Temperatur aufgetragen wird. Die Glasübergangstemperaturen der fluorhaltigen Polymeren des Fasermantels liegen in der Nähe derjenigen des Faserkemmaterials (PMMA; 106° C), d.h. zwischen 80 und 120° C. Der Fasermantel ist aber nur ca. 10 µm dick, seine optischen Eigenschaften sind genau eingestellt und können leicht durch thermische oder chemische Einflüsse beeinflußt bzw. verändert werden. Daher müssen die Materialien der Schutzhülle bei möglichst tiefer Schmelztemperatur aufextrudiert werden.

Bei Versuchen der Erfinder der vorliegenden Anmeldung mit Blends aus PMMI (Pleximid 130, Hersteller: Röhm, Deutschland) und tiefviskosem Polyamid 12 (relative Viskosität von 1,65, gemäß 0.5 % in m-Cresol), konnte festgestellt werden, daß aufgrund der hohen Blendviskosität deutlich zu hohe Schmelztemperaturen bei der K-LWL-Kabelextrusion resultierten und die optische Dämpfung der Faser hier irreversibel erhöht wurde. Polyamid 12/PMMI-Mischungen sind daher als Materialien für die Schutzhülle unbrauchbar.

Im übrigen sind die in den Beispielen der EP 0 649 738 A1, Seite 6. Tabelle, aufgeführten Polyglutarimide sehr hochviskos und können nicht als Zwischenschicht für ein Dreischichtverfahren oder als Komponente im Blend mit Polyamid 12 für die K-LWL-Extrusion eingesetzt werden.

EP 0 767 190 A1 beschreibt die Verwendung von Polyamid-Haftvermittlern zur Herstellung von Mehrschichtpolymer- oder Rohrleitungen, d.h. Benzin- oder Kühlflüssigkeitsleitungen für den Automobilbau. Die hier eingesetzten Polyamide sind üblicherweise nicht tiefviskos. Weiterhin sind auch keine optischen Eigenschaften der Schichten gefordert. Die in der EP 0 767 190 A1 beschriebenen Polyamide weisen zwar einen Aminoendgruppenüberschuß auf. Bei durch die Erfinder der vorliegenden Anmeldung durchgeführten K-LWL-Extrusionsversuchen mit dem in der EP 0 767 190 A1 beschriebenen Haftvermittler wurden zwar akzeptable Extrusionstemperaturen erreicht, so daß die optische Faser nicht thermisch geschädigt wurde. Bei der nachfolgenden Hitzelagerung (80° C, 24 Stunden) färbte sich jedoch die äußere Schicht der Faser, also der Mantel, braun. Dies rührte anscheinend von einer Diffusion der Monomeren in den Mantel und einer anschließenden chemischen Reaktion her. Die Verfärbung beeinträchtigte die optischen Eigenschaften der Faser. Die Polyamidformmassen gemäß EP 0 767 190 A1 scheiden somit als Haftvermittler oder Schutzschicht für K-LWL aus.

Der vorliegenden Erfindung liegt daher die Aufgabe zugrunde, eine optische Ader mit geringer Relativbewegung auch bei großen Temperaturschwankungen bereitzustellen. Die die Schutzhülle bildende Formmasse soll auf dem Fasermantel gut haften und diesen chemisch nicht angreifen. Außerdem soll sichergestellt sein, daß das Übertragungsverhalten und die Dämpfungseigenschaften der optischen Ader weitgehend dem des nicht mit der Formmasse umhüllten K-LWL entsprechen.

Die vorliegende Erfindung betrifft daher eine optische Ader 1 mit einem einen Faserkern 2 und einen ein- oder mehrschichtig aufgebauten Fasermantel 3 aufweisenden Kunststoff-Lichtwellenleiter (K-LWL) 2, 3 und mindestens einer einen K-LWL 2, 3 umschließenden Schutzhülle 4. Der Fasermantel 3 oder zumindest seine äußere Hülle aus einem fluorhaltigen Kunststoff und die Schutzhülle 4 bestehen im wesentlichen aus Polyamiden (PA), vorzugsweise aus PA 11, PA 12, PA 610, PA 612, PA 1212 oder den Copolyamiden PA 6/12, PA 6/9/6, PA 6/9/12, PA 610/6, PA 610/11. PA 610/12, PA 612/6, PA 612/11, PA 612/12 oder deren Gemischen sowie weiteren Homo- und Copolyamiden mit einem Schmelzpunkt von unter 220° C, vorzugsweise unter 210° C, besonders bevorzugt unter 200° C, und sind selbsthaftend auf dem Fasermantel 3 aufgebracht. Die Carboxylendgruppenkonzentration des eingesetzten Polyamids beträgt maximal 15 µÄq/g und die Aminoendgruppenkonzentration liegt im Bereich zwischen 50 µÄq/g und 300 µÄq/g.

Diese optische Ader gemäß Patentanspruch 1 erfüllt die oben genannten Anforderungen.

Die erfindungsgemäß eingesetzten Polyamide sind tiefviskos, damit sie bei möglichst tiefer Schmelztemperatur extrudiert werden können. Insbesondere weisen die erfindungsgemäßen Polyamide eine Viskosität von unter 2,0, insbesondere von unter 1,8 und besonders bevorzugt von 1,4 bis 1,8 (relative Viskosität gemessen 0,5 % in m-Cresol) auf. Dadurch läßt sich die Qualität der Verarbeitung erhöhen. Es zeigte sich in Versuchen (siehe unten), daß sich bei einem durchgeführten Temperaturtest (80° C, 24 Stunden) keine Verfärbung der äußeren Schicht der Faser, d.h. des Mantels, einstellte und somit keine Beeinträchtigung der optischen Eigenschaften der Faser resultierte.

In den Unteransprüchen sind vorteilhafte Ausführungsformen der Erfindung enthalten.

Aufgrund des guten Haftsitzes der aus einem modifizierten PA bestehenden Schutzhülle auf dem Fasermantel des K-LWL muß ein endseitig aufgesetzter Stecker deutlich geringere Klemm- oder Crimpkräfte auf die optische Ader ausüben, um den als "Pistoning" bezeichneten Effekt zu verhindern. Dies vermindert die durch äußere Kräfte hervorgerufene Signaldämpfung im K-LWL und ermöglicht die Verwendung vergleichsweise einfach aufgebauter und damit billigerer Stecker oder Halterungen. Außerdem kann das Abmanteln der Schutzhülle im Bereich des Steckers entfallen. Selbst eine 24stündige Lagerung der optischen Ader bei einer Temperatur T = 80° C führt zu keiner, durch chemische Prozesse hervorgerufenen Erhöhung der Signaldämpfung. Es tritt insbesondere keine Verfärbung des Fasermantels auf.

Die Erfindung wird im Folgenden anhand der Zeichnung und der Beispiele erläutert, wobei die einzige Figur ein Ausführungsbeispiel einer optischen Ader ("K-LWL-Simplex-Ader") im Querschnitt zeigt.

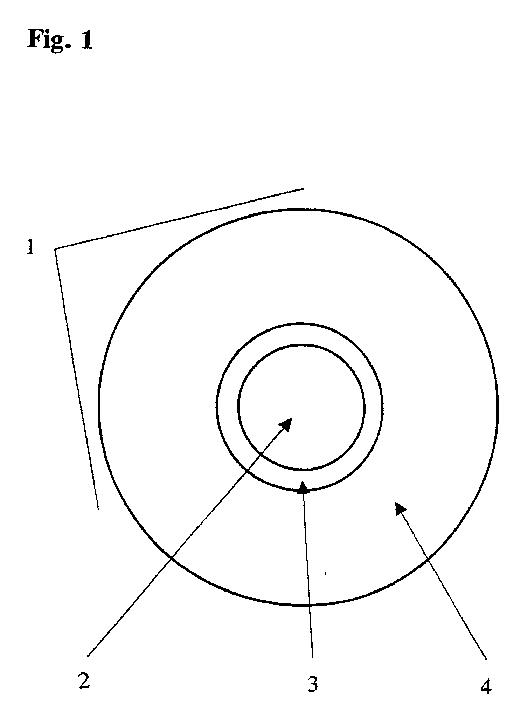

Die in Figur 1 nur schematisch und nicht maßstabsgetreu im Querschnitt dargestellte optische Ader 1 kommt insbesondere als Übertragungselement für die störungsfreie Übermittlung von Daten und Signalen innerhalb der Fahrgastzelle eines Kraftfahrzeugs zum Einsatz. Als lichtleitende Struktur enthält die Ader 1 einen sogenannten Stufenindexprofil K-LWL, der im gezeigten Ausführungsbeispiel aus einem PMMA-Faserkern 2 ( ∅_{Kern} = 980 µm, Brechzahl n_{Kern} = 1.49) und einem aus einem fluorhaltigen Polymer gefertigten, ein- oder mehrschichtig aufgebauten Fasermantel 3 (∅_{Mantel} = 1000 µm, Brechzahl n_{Mantel} = 1,35 - 1.42) besteht. Da sich der Kunststoff PMMA sehr gut schneiden und schleifen läßt, nimmt die Bearbeitung der Faserstirnfläche (diese soll sauber, glatt und riefenfrei sein) nur wenig Zeit in Anspruch. Darüber hinaus besitzt der K-LWL 2/3 trotz des relativ großen Durchmessers von etwa 1 mm eine außerordentlich hohe. die Montage und Verlegung erleichternde Biegefestigkeit. Die optische Dämpfung des Faserkerns 2 beträgt typischer Weise 70-100 db/km (λ = 570 nm) bzw. 125 - 150 db/km (λ = 650 nm).

Bei den als Mantelmaterial bzw. als Material für die äußere Mantelschicht verwendeten fluorhaltigen Polymeren kann es sich um reine Polymere, Copolymere fluorhaltiger Monomere sowie Copolymere fluorhaltiger Monomere mit Acrylsäure oder Acrylaten sowie Mischungen solcher Polymere oder Copolymere handeln. In Betracht kommen insbesondere Vinylidenfluorid, Tetrafluorethen, Hexafluorpropen, Methacrylsäure-tetrafluor-propylester, Methacrylsäure-pentafluor-propylester, Methacrylsäuretrifluorethylester, Methacrylsäure-heptadeca-fluor-decylester sowie Mischungen oder Copolymerisate derselben, wahlweise auch Acrylsäure- oder Acrylatmodifizierte Polymere, Copolymeren oder Polymermischungen.

Die Außendurchmesser des Faserkerns 2 und Fasermantels 3 entsprechen der in der IEC 60 793-2 spezifizierten Norm (Außendurchmesser des Mantels ∅_{Mantel} = 1000 ± 60 µm, Kerndurchmesser ∅_{Kern} typischerweise 10-20 µm kleiner als ∅_{M}; numerische Apertur 0.5 ± 0,15). Es ist selbstverständlich auch möglich, die Maße des Faserkerns 2 und des Fasermantels 3 entsprechend den anderen Normwerten ( ∅_{Mantel} = 750 ± 45 µm bzw. 500 ± 30 µm) zu wählen oder den Abmessungen der im freien Handel erhältlichen Stufenindexprofil-K-LWL ( ∅_{Mantel} = 75 µm/ 125 µm/ 250 µm/ 380 µm/ 1500 µm/ 2000 µm/ 3000 µm) anzupassen.

Die den K-LWL umhüllende durch Co- oder Tandemextrusion aufgebrachte Formmasse 4 schützt den empfindliche K-LWL 2/3 vor äußeren Einflüssen. Ihre Dicke ist entsprechend der oben erwähnten Norm so gewählt, daß der Außendurchmesser der Ader ∅_{Ader} = 2,2 ± 0,1 mm ( ∅_{Mantel} = 1000 µm oder ∅_{Mantel} = 750 µm) bzw. ∅_{Ader} = 1.5 ± 0.1 mm ( ∅_{Mantel} = 500 µm) beträgt.

Die als Schutzhülle dienende und besonders gut auf dem fluorhaltigen Polymer des Fasermantels 3 haftende Formmasse 4 besteht aus einem modifizierten PA. dessen Carboxyl-Endgruppenkonzentration maximal 15 µÄq/g beträgt und dessen Aminoendgruppenkonzentration im Bereich zwischen 50-300 µÄq/g liegt. Die genannte Aminoendgruppenkonzentration wird durch einen aminischen Regler eingestellt, den man dem noch nicht auspolymerisierten PA zusetzt (Einpolymerisation des Kettenreglers). Als Kettenregler eignen sich z.B. Hexylamin, Octylamin, Ethylhexylamin, Tridecylamin, Dibutylamin, Stearylamin sowie weitere aliphatische, cycloaliphatische oder aromatische Monoamine, die 2-44 C-Atome, insbesondere 4-36 C-Atome enthalten als auch Diamine wie z.B. 1,4-Diaminobutan, 1,6-Diaminohexan, Diaminocyclohexan, 1,10-Diaminodecan, 1,12-Diaminododecan, m- oder p-Xylylendiamin, Cyclohexyldimethylendiamin, Bis-(p-aminocyclohexyl)methan sowie weitere aliphatische, cycloaliphatische oder aromatische Amine, die 2-44 C-Atome, insbesondere 6-36 C-Atome enthalten, als auch der Überschuß eines aminischen difunktionellen Monomers, das Hauptkomponente des Polyamids ist.

Geeignete Polyamide im Sinne der Erfindung sind Homo- und Copolyamide, die sich bei genügend tiefen Temperaturen, d.h. bei maximal 220° C, verarbeiten lassen, um den Mantel und Faserkern des K-LWL nicht zu beschädigen. Erfindungsgemäß ist es wesentlich, daß die eingesetzten Polyamide eine relative Viskosität von unter 2,0, insbesondere von unter 1,8 und ganz besonders bevorzugt im Bereich von 1,4-1,8 aufweisen (relative Viskosität gemessen 0,5 % in m-Cresol bei 20° C).

Solche Polyamide können auch polyamidbildenden Monomeren wie z.B. Caprolactam, Laurinlactam. Aminocapronsäure, Aminoundecansäure, Dodecandisäure, Dimersäure, Terephthalsäure, Isophthalsäure, Cyclohexandicarbonsäure, Naphthalindicarbonsäure, tert-butyl-Isophtalsäure, Phenylindan-dicarbonsäure, Diaminobutan, Hexamethylendiamin. Methylpentamethylendiamin, 3,3 Dimethyl-4,4-Xylylendiamin, 2,2-Bis(paminocyclohexyl)-propan, Bis(p-aminocyclohexyl)methan, Isophorondiamin, Polypropylenglcoldiamin, Norbonandiamin, 1,3-Bis(aminomethyl)cyclohexan, TCD-Diamin aufgebaut sein, sofern sie einen Schmelzpunkt von maximal 220° C aufweisen. vorzugsweise sollen die Polyamide einen Schmelzpunkt unter 210°C und besonders bevorzugt unter 200° C aufweisen. Hierzu gehören erfindungsgemäß insbesondere PA 11, PA 12, PA 610, PA 612, PA 1212 oder die Copolyamide PA 6/12, PA 6/9/6, PA 6/9/12, PA 610/6, PA 610/11, PA 610/12, PA 612/6, PA 612/11, PA 612/12, oder deren Gemische, wobei PA 12 besonders bevorzugt ist.

Den so aufgebauten Polyamiden können noch die üblichen Zusatzstoffe wie UV- und Hitzestabilisatoren, Kristallisationsbeschleuniger, Weichmacher, Flammschutzmittel, Gleitmittel und anorganische Füllstoffe zugesetzt sein.

Um den Haftsitz der aus einem modifizierten Polyamid gefertigten Schutzhülle 4 auf dem Fasermantel 3 zu prüfen, wurde folgende Testmethode angewandt:
- teilweises Absetzen der Schutzhülle einer ca. 500 mm langen Ader derart, daß die Länge der verbleibenden Schutzhülle ca. 30 mm beträgt;
- Durchführung des abgesetzten Teils der Ader durch die Bohrung einer Platte, wobei der Durchmesser der Bohrung mit ∅ ≈ 1,1 mm etwas größer ist als der Außendurchmesser des Fasermantels;
- Einspannen des abgesetzten Endes der Ader in eine Zugprüfmaschine (Abzugsgeschwindigkeit: 10 mm/min) und
- Messung der Zugkraft, bei der sich die Schutzhülle vom Mantel des K-LWL löst.

Dem Test unterworfen wurden die in der Tabelle angegebenen PA 12 Typen.

| Polymer | NH₂-Endgruppenkonzentration | COOH-Endgruppenkonzentration | rel. Viskosität 0,5% in m-Cresol 20° C | |
|---|---|---|---|---|
| PA Nr. 1 | 10 | 95 | 1.65 | PA nicht Erfindungsgemäß |
| PA Nr. 2 | 95 | < 15 | 1.66 | PA erfindungsgemäß |
| PA Nr. 3 | 134 | < 5 | 1.58 | PA erfindungsgemäß |
| PA Nr. 4 | 173 | < 5 | 1.47 | PA erfindungsgemäß |

Hierbei zeigte sich, daß die für das Abstreifen einer aus PA Nr. 1 bestehenden Schutzhülle benötigte Zugkraft aufgrund des von Probe zu Probe sehr unterschiedlichen Haftsitzes der Schutzhülle auf dem jeweiligen K-LWL minimal etwa 11 N (kein Haftsitz), typischerweise 40-50 N und maximal 51 N betrug. Die gemessenen Abstreifkräfte für Adern mit erfindungsgemäßen PA-Schutzhüllen variierten mit Werten zwischen 68-75 N deutlich weniger. Der gemessene Maximalwert der Abstreifkraft von 75 N überrascht um so mehr, als die Extrusionstemperatur für die die Schutzhülle bildende Formmasse wegen der vergleichsweise niedrigen Glasübergangstemperatur des als Kernmaterial verwendeten PMMA (T_{G} ≈ 100-110° C) nur etwa T = 185-200° C betragen durfte.

Eine vergleichsweise große Abstreifkraft wurde auch bei einer optischen Ader gemessen, deren Schutzhülle aus dem in EP 0 767 190 A1 beschriebenen PA bestand. Für die genannten Anwendungen eignet sich dieses PA allerdings nicht, da die Wärmelagerung entsprechend aufgebauter Adern (24 h bei T = 80° C) eine Braunfärbung des äußeren Mantelbereichs zur Folge hatte.

Im folgenden drei typische Beispiele getesteter Adern (∅_{Mantel} = 1000µm; ∅_{Schutzhülle} = 2,2 mm):
1) K-LWL: Typ SB-1000; Asahi Chemical Industry Co., LTD
   Formmasse: Grilamid L16A (erfindungsgemäß PA);
   EMS-Chemie AG; CH-7013 Domat/Ems
   Verarbeitungstemperatur der Formasse: T = 190° C
   Verarbeitungsgeschwindigkeit: 60 m/Min
   Abstreifkraft: 68 - 75 N (Mittelwert 73N)
2) K-LWL: SB-1000
   Formmasse: Grilamid L16 LM (nicht erfindungsgemäßes PA);
   EMS-Chemie AG
   Verarbeitungstemperatur: T = 190° C
   Verarbeitungsgeschwindigkeit: 60 m/Min
   Abstreifkraft: 48-51N (Mittelwert 49N)
3) K-LWL: Typ TB-1000; Asahi Chemie Industry Co., LTD
   Formmasse: Grilamid L16LM (nicht erfindungsgemäße PA)
   Verarbeitungstemperatur: T = 190° C
   Verarbeitungsgeschwindigkeit: 60m/Min
   Abstreifkraft: 7-18N (Mittelwert 11N)

Die Erfindung beschränkt sich selbstverständlich nicht auf die oben beschriebenen Ausführungsbeispiele. So ist es ohne weiteres möglich,
- die Schutzhülle 4 der optischen Ader 1 auch mehrschichtig auszubilden (siehe insbesondere WO 99/1203) oder sie mit einem PVC-Mantel der Dicke d ≈ 1-2 mm zu versehen;
- Verstärkungselemente, insbesondere Glasfasern, Kohlefasern oder Mineralfasern in die Schutzhülle 4 einzubetten;
- dem Schutzhüllenmaterial noch Füllstoffe ( Ruß, Talkum, usw.) beizumischen und
- eine oder mehrere der optischen Adern 1 als lichtübertragende Elemente in den aus A. Weinert: *Kunststofflichtwellenleiter-* Grundlagen, Komponenten, Installation; Publicis MCD Verlag, 1998, Seiten 55-62 bekannten Simplex-, Duplex-, Zwillingsoder Hybridkabeln zu verwenden.

## Patentansprüche

1. Optische Ader (1) mit einem einen Faserkern (2) und einen ein- oder mehrschichtig aufgebauten Fasermantel (3) aufweisenden Kunststoff-Lichtwellenleiter (K-LWL) (2, 3) und mindestens einer den K-LWL (2, 3) umschließenden Schutzhülle (4), wobei der Fasermantel (3) oder zumindest seine äußere Schicht aus einem fluorhaltigen Kunststoff und die Schutzhülle (4) aus Polyamid bestehen, **dadurch gekennzeichnet, daß**
die Schutzhülle (4) aus Polyamiden oder Copolyamiden oder deren Gemischen mit einem Schmelzpunkt von unter 220° C besteht und selbsthaftend auf dem Fasermantel (3) aufgebracht ist,
wobei die Carboxylendgruppenkonzentration des Polyamids maximal 15 µÄq/g beträgt und die Aminoendgruppenkonzentration im Bereich zwischen 50 µÄq/g und 300 µÄq/g liegt.

2. Optische Ader nach Anspruch 1, **dadurch gekennzeichnet, daß** die Polyamide oder Copolyamide oder deren Gemische einen Schmelzpunkt von unter 210° C und besonders bevorzugt von unter 200° C aufweisen.

3. Optische Ader nach Anspruch 1 oder 2, **dadurch gekennzeichnet, daß** die Polyamide ausgewählt sind aus der Gruppe, die aus PA 11, PA 12, PA 610, PA 612, PA 1212 oder den Copolyamiden PA 6/12, PA 6/9/6, PA 6/9/12, PA 610/6, PA 610/11, PA 610/12, PA 612/6, PA 612/11, PA 612/12 oder deren Gemischen besteht, wobei PA 12 besonders bevorzugt ist.

4. Optische Ader nach einem der Ansprüche 1 bis 3, **dadurch gekennzeichnet, daß** die Carboxylendgruppenkonzentration des Polyamids maximal 15 µÄq/g beträgt und die Aminoendgruppenkonzentration im Bereich zwischen 90 µÄq/g und 250 µÄq/g liegt.

5. Optische Ader nach den Ansprüchen 1 bis 4, **dadurch gekennzeichnet, daß** die Aminoendgruppenkonzentration durch Zugabe von mono- oder difunktionellen Aminen oder durch Überschuß einer das Polyamid bildenden Diaminkomponente eingestellt ist.

6. Optische Ader nach Anspruch 1 bis 5, **dadurch gekennzeichnet, daß**
das Polyamid zumindest einen Zusatzstoff aus der Gruppe UV-Stabilisator, Wärme-Stabilisator, Kristallisationsbeschleuniger, Weichmacher, Flammschutzmittel, Gleitmittel oder an organischer Füllstoff enthält.

7. Optische Ader nach Anspruch 1 bis 6, **dadurch gekennzeichnet, daß** der Fasermantel (3) aus Vinylidenfluorid, Tetrafluorethen, Hexafluorpropen, Methacrylsäure-tetrafluor-propylester, Methacrylsäure-pentafluor-propylester, Methacryl-säure-trifluor-ethylester, Methacrylsäure-heptadecafluor-decylester sowie Mischungen oder Copolymerisaten der genannten Stoffe, wahlweise auch aus Acrylsäure- oder Acrylat-modifizierten Polymeren, Copolymeren oder Polymermischungen besteht.

8. Optische Ader nach Anspruch 1 bis 7, **dadurch gekennzeichnet, daß** der Faserkern (2) aus Polymethylmethacrylat (PMMA) besteht.

9. Optische Ader nach Anspruch 1 bis 8, **dadurch gekennzeichnet, daß** der Außendurchmesser des K-LWL (2,3) im Bereich zwischen 75 - 3000 µm liegt.

10. Optische Ader nach Anspruch 1 bis 9, **dadurch gekennzeichnet, daß** der Außendurchmesser des Fasermantels (3) 1000 ± 60 µm oder 750 ± 45 µm oder 500 ± 30 µm beträgt.

11. Optische Ader nach Anspruch 1 bis 10, **dadurch gekennzeichnet, daß** der Durchmesser des Faserkerns (2) etwa 10 bis 20 µm kleiner ist als der entsprechende Außendurchmesser des Fasermantels (3).

12. Optische Ader nach einem der vorhergehenden Ansprüche 1 bis 11. **dadurch gekennzeichnet, daß** der Außendurchmesser der optischen Ader (1) im Bereich zwischen 0,15 mm und 5,0 mm liegt.

## Claims

1. Optical fibre (1) with a plastic optical waveguide (K-LWL) (2,3) having a fibre core (2) and a single-layer or multi-layer fibre cladding (3) and at least one protective sheeting (4) enclosing the K-LWL (2,3), wherein the fibre cladding (3) or at least its outer layer consists of a fluorine-containing plastic material and the protective sheeting (4) consists of polyamide, **characterised in that**
the protective sheeting (4) consists of polyamides or copolyamides or mixtures thereof having a melting point of less than 220° C and is self-adhesively applied on the fibre cladding (3),
wherein the maximum concentration of carboxyl end groups of the polyamide is 15 µeq/g and the concentration of amino end groups is between 50 µeq/g and 300 µeq/g.

2. Optical fibre according to claim 1, **characterised in that** the polyamides or copolyamides or mixtures thereof have a melting point of less than 210° C, especially preferably of less than 200° C.

3. Optical fibre according to claim 1 or claim 2, **characterised in that** the polyamides are selected from the group consisting of PA 11, PA 12, PA 610, PA 612, PA 1212 or the copolyamides PA 6/12, PA 6/9/6, PA 6/9/12, PA 610/6, PA 610/11, PA 610/12, PA 612/6, PA 612/11, PA 612/12 or mixtures thereof, wherein PA 12 is especially preferred.

4. Optical fibre according to one of the claims 1 to 3, **characterised in that** the maximum concentration of carboxyl end groups of the polyamide is 15 µeq/g and the concentration of amino end groups is between 90 µeq/g and 250 µeq/g.

5. Optical fibre according to one of the claims 1 to 4, **characterised in that** the concentration of amino end groups is adjusted by addition of mono- or bifunctional amines or by an excess of a diamine component forming the polyamide.

6. Optical fibre according to one of the claims 1 to 5, **characterised in that** the polyamide contains at least one additive selected from the group of UV stabilizer, heat stabilizer, crystallization accelerator, softener, fire retardant, lubricant or inorganic filler.

7. Optical fibre according to one of the claims 1 to 6, **characterised in that** the fibre cladding (3) consists of vinylidene fluoride, tetrafluoroethylene, hexafluoropropene, methacrylic acid-tetrafluoropropylester, methacrylic acid-pentafluoropropylester, methacrylic acid-trifluoroethylester, methacrylic acid-heptadecafluorodecylester as well as mixtures or copolymers of the substances listed, optionally also acrylic acid- or acrylate-modified polymers, copolymers or polymer mixtures.

8. Optical fibre according to claims 1 to 7, **characterised in that** the fibre core (2) consists of polymethyl methacrylate (PMMA).

9. Optical fibre according to claims 1 to 8, **characterised in that** the outer diameter of the plastic optical waveguide (2,3) is in a range of 75 to 3000 µm.

10. Optical fibre according to claims 1 to 9, **characterised in that** the outer diameter of the fibre cladding (3) is 1000 ± 60 µm or 750 ± 45 µm or 500 ±30 µm.

11. Optical fibre according to claims 1 to 10, **characterised in that** the diameter of the fibre core (2) is approximately 10 to 20 µm smaller than the corresponding outer diameter of the fibre cladding (3).

12. Optical fibre according to one of the preceding claims 1 to 11, **characterised in that** the outer diameter of the optical fibre (1) is in a range of 0.15 mm and 5.0 mm.

## Revendications

1. Brins optiques (1) avec un guide d'ondes optiques en matière plastique (GOO-MP) (2, 3) présentant un coeur de fibre (2) et une enveloppe de fibre de construction mono-ou multicouches (3), et au moins une gaine de protection enveloppant le GOO-MP (2, 3), l'enveloppe de la fibre (3) ou au moins sa couche externe étant constituées d'une matière plastique contenant du fluor et la gaine de protection (4) étant constituée de polyamide, **caractérisés en ce que**,
la gaine de protection (4) est constituée de polyamides ou de copolyamides ou de leurs mélanges ayant un point de fusion inférieur à 220°C et elle est appliquée de manière autoadhésive sur l'enveloppe de la fibre (3),
la concentration en groupes carboxyle terminaux du polyamide étant au maximum de 15 µeq/g et la concentration en groupes amino terminaux est dans la plage comprise entre 50 µeq/g et 300 µeq/g.

2. Brins optiques selon la revendication 1, **caractérisés en ce que** les polyamides ou copolyamides ou leurs mélanges présentent un point de fusion inférieur à 210°C et de manière particulièrement préférée, inférieur à 200°C.

3. Brins optiques selon la revendication 1 ou 2, **caractérisés en ce que** les polyamides sont choisis dans le groupe formé par PA 11, PA 12, PA 610, PA 612, PA 1212 ou les copolyamides PA 6/12, PA 6/9/6, PA 6/9/12, PA 610/6, PA 610/11, PA 610/12, PA 612/6, PA 612/11, PA 612/12 ou leurs mélanges, PA 12 étant particulièrement préféré.

4. Brins optiques selon l'une quelconque des revendications 1 à 3, **caractérisés en ce que** la concentration en groupes carboxyle terminaux du polyamide est au maximum de 15 µeq/g et que la concentration en groupes amino terminaux est dans la plage comprise entre 90 µeq/g et 250 µeq/g.

5. Brins optiques selon les revendications 1 à 4, **caractérisés en ce que** la concentration en groupes amino terminaux est ajustée en ajoutant des amines mono- ou bi-fonctionnelles, ou à l'aide d'un excédent d'un composant diamine formant le polyamide.

6. Brins optiques selon la revendication 1 à 5, **caractérisés en ce que** le polyamide contient au moins un additif choisi dans la groupe formé par un stabilisant aux UV, un stabilisant à la chaleur, un accélérateur de cristallisation, un plastifiant, un ignifugeant, un agent de glissement ou une charge minérale.

7. Brins optiques selon la revendication 1 à 6, **caractérisés en ce que** l'enveloppe de la fibre (3) est constituée de fluorure de vinylidène, de tétrafluoroéthène, d'hexafluoropropène, d'ester tétrafluoropropylique de l'acide méthacrylique, d'ester pentafluoropropylique de l'acide méthacrylique, d'ester trifluoroéthylique de l'acide méthacrylique, d'ester heptadécafluorodécylique de l'acide méthacrylique, ainsi que de mélanges ou copolymères des substances citées, éventuellement encore de polymères, copolymères ou mélanges de polymères, modifiés par l'acide acrylique ou un acrylate.

8. Brins optiques selon la revendication 1 à 7, **caractérisés en ce que** le coeur de la fibre (2) est constitué de poly(méthacrylate de méthyle) (PMMA).

9. Brins optiques selon la revendication 1 à 8, **caractérisés en ce que** le diamètre externe du GOO-MP (2, 3) est dans la plage comprise entre 75 et 3000 µm.

10. Brins optiques selon la revendication 1 à 9, **caractérisés en ce que** le diamètre externe de l'enveloppe de la fibre (3) est de 1000 ± 60 µm ou 750 ± 45 µm ou 500 ± 30 µm.

11. Brins optiques selon la revendication 1 à 10, **caractérisés en ce que** le diamètre du coeur de la fibre (2) est inférieur d'environ 10 à 20 µm, au diamètre externe correspondant de l'enveloppe de la fibre (3).

12. Brins optiques selon l'une quelconque des revendications précédentes 1 à 11, **caractérisés en ce que** le diamètre externe des brins optiques (1) est dans la plage comprise entre 0,15 et 5,0 mm.
